(19) Europäisches Patentamt / European Patent Office / Office européen des brevets

(11) **EP 3 575 338 B1**

(12) **EUROPEAN PATENT SPECIFICATION**

(45) Date of publication and mention
of the grant of the patent:
**04.11.2020 Bulletin 2020/45**

(51) Int Cl.:
**C08G 59/50** *(2006.01)*    **C08G 59/56** *(2006.01)*
**C08G 59/62** *(2006.01)*

(21) Application number: **19177547.7**

(22) Date of filing: **30.05.2019**

(54) **CURING AGENT FOR EPOXY RESINS, COMPOSITIONS COMPRISING SAID AGENT AND USE THEREOF**

HÄRTER FÜR EPOXIDHARZE, DEN HÄRTER ENTHALTENDE ZUSAMMENSETZUNGEN SOWIE VERWENDUNG DESSEN

AGENT DURCISSEUR POUR RÉSINE ÉPOXIDE, COMPOSITION COMPRENANT CET AGENT, ET SON UTILISATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.05.2018 PL 42578818**

(43) Date of publication of application:
**04.12.2019 Bulletin 2019/49**

(73) Proprietor: **CIECH Zywice Sp. z o.o.**
**37-310 Nowa Sarzyna (PL)**

(72) Inventors:
• **KANIA, Maria**
**37-310 Nowa Sarzyna (PL)**
• **WILKOS, Slawomir**
**37-310 Nowa Sarzyna (PL)**
• **LARWA, Tomasz**
**37-310 Nowa Sarzyna (PL)**

(74) Representative: **Patpol Kancelaria Patentowa Sp. z o.o.**
**Nowoursynowska 162J**
**02-776 Warszawa (PL)**

(56) References cited:
**WO-A1-2015/117846     WO-A1-2016/151007**

**Description**

TECHNICAL FIELD

The present invention relates to a curing agent for epoxy resins comprising polyamines and a compound of acidic character, an epoxy resin composition comprising said curing agent and use of the curing agent according to the invention for curing of the epoxy resin. The curing agent according to the invention can be used in many fields, including, for example, in construction or shipbuilding industry.

BACKGROUND ART

Epoxy systems are complex systems comprising at least two components, which can react chemically with each other forming a cured epoxy resin, which is a hard, irreversibly hardened material. The first requisite component of an epoxy system is an epoxy resin, and the other is a hardening agent, also known as a curing agent. The epoxy resin itself is a chemosetting compound including at least two epoxy groups in its structure. Raw materials used in the preparation of the epoxy resins are compounds including hydroxy groups at their ends, in general polyphenols, seldom polyglycols, and epichlorohydrin or oligomers. The most popular resins are bisphenol A epoxy resins prepared from DIAN (also known under a name of bisphenol A) and epichlorohydrin. Epoxy resins can be cured (hardened) by chemical reaction of epoxy groups with reactive groups of a curing agent (e.g. amino groups). Curing converts epoxy resins with a relatively low molecular weight, into materials with a relatively high molecular weight by chemical addition of curing compounds. In respect of varied polycondensation degree the resins are usually divided into three groups: low molecular, middle molecular and high molecular resins, which often differ in their purpose. For example, for the manufacture of epoxy and hybrid (epoxy/polyester) powder paints, middle- and high molecular resins are used. This group of resins includes solid resins of the high softening temperature (80 - 150°C, usually 80 - 110°C) and a low epoxy number (0.02 - 0.18 mol/100 g, usually 0.1 - 0.18 mol/100 g). A curing agent type significantly influences the properties of an epoxy resin, and thus its applicability.

Epoxy resins are currently widely used in the industry - the heavy industry, such as, for example, shipbuilding, machinery or construction, or automobile industry, but also they find application in the light industry, for example, in the manufacture of skis, furniture elements or specialized equipment, or electronic equipment.

Uncured epoxy resins are viscous liquids or solids with the molecular weight not exceeding 4000 g/mol. In such a form, they have no practical application. To provide industrial applicability, the epoxy resins must undergo cross-linking in the curing process to provide an insoluble and non-melting product of high strength and resistance against chemical and physical agents.

Currently, during the curing process, acid anhydrides and aliphatic amines that are the most often used compounds in reaction with active hydrogen atoms of functional groups present in the structure of an epoxy resin. However, due to the fact that the former of the above mentioned group of compounds require elevated temperatures during the curing process, usually in the range of 100-180°C, the latter ones are more commonly used as the curing agents in practical applications.

Applicability of aliphatic amines as cross-linking compounds for the epoxy resins was identified in the fifties of the previous century by Frederick Whittier and Raymond J Lawn (see, for example, the application GB811905). Afterwards, the research on the amine curing agents for epoxy resins was intensified. In the sixties, a need for the compositions of the epoxy resins curing agents with enhanced storage life that could be used in both elevated and room temperatures became apparent (see, for example, the patents US3294748 and US3519582).

Desirable compositions of the epoxy resins are characterized by a number of features which determine their practical applicability as high quality coatings. On one hand, they should be characterized by low viscosity, rendering them easily workable at ambient or, in particular, lower temperatures, but, at the same time, their hardening process, i.e. cross-linking, should occur relatively fast without so-called blooming (also known as curing defects), even in humid, cold conditions, when ambient temperature decreases. The term "blooming" generally defines all defects, which appear upon curing of epoxy resins, such as, for example, cloudiness, spots, as well as coarse or sticky surface, which manifest themselves usually due to formation of amine salts with carbon dioxide ($CO_2$) present in the air of high humidity and low temperature. Instead, it is desirable for the cured epoxy resin coating to have a smooth and even surface with the best possible gloss, without any cloudiness, spots or gaps. Moreover, it should be characterized by the above-mentioned features, namely good hardness and high resistance to a number of physical and chemical agents.

Currently, in order to provide desirable properties of the final product in epoxy resin coatings, *inter alia,* appropriate high-boiling diluents for epoxy resins are used, such as, for example, benzyl alcohol or phthalates, which considerably enhance workability of the resins. However, it is desirable for such diluents not to disturb coating structure. To cope with this requirement, such systems usually contain very low levels of diluents in a form of substances that are diffusively released after curing. Therefore the effects thus obtained are often far from desirable.

Another possibility of diluting the epoxy resin composition is by adding low-molecular weight amines, such as isophoronediamine, xylenediamine or dimethylaminopropylamine. However, such low-molecular weight amines are usually characterized by a very strong smell and they are irritant for the skin. They also cause the cloudiness effect in humid, cold conditions.

Another attempt to enhance quality of such epoxy resin coatings is use of multicomponent curing compositions in the coat curing process. For example, patent description US 2009/0163676 discloses curing compositions comprising at least one benzylated polyalkylene polyamine and at least one additional amine. However, by using such a curing agent when no adduct with epoxides is formed, the curing process proceeds very slowly, in particular under cold conditions. Partial adduction to epoxides results in the faster curing rate, however in this manner viscosity of the curing agent is considerably increased and handling of such a curing agent is made more difficult.

Next, the patent description of US4129556 discloses epoxy resin compositions comprising hydroxybenzylated diamines as a curing agent, which are preferably solid at the room temperature. However, application of this amine curing agent requires higher temperature, which is not desirable in applications in construction industry, or shipyards.

It is known from the prior art that phenol groups exert accelerating action on epoxy-amine curing. Phenol and alkylphenols have an intensive smell, and they are toxic, and for that reason their presence in high quantities is not desirable in the compositions, especially in applications such as food industry, and they must be co-formulated in the compositions with other compounds or optionally converted into other derivative compounds.

For example, from the German publications DE2612211 and DE2025159 it is known that the reaction of aliphatic amines with formaldehyde and phenol can result in the amine curing agents which when combined with epoxides, render coatings with good quality and resistance to organic acids and diluted alcohols.

For example, German patent description DE2025159 describes a method of preparing a curing agent in a form of a Mannich base as a product of condensation reaction, which does not contain any free phenol. When in a form of 35% w/w solution in 4,4'-diamino-3,3'-dimethyl-cyclohexylmethane, it can be used as a curing agent for epoxy resins, in particular in food processing applications. However, due to a small content of the Mannich base and amine in said solution, which participate in the process of curing of the phenol hydroxy groups present in the amount as small as 2.4% w/w, the curing process involving this Mannich base is very slow, especially at low temperatures.

Another German patent description DE2823682 discloses further curing agents as the reaction products prepared from Mannich bases and polyamines. However, coatings formed according to this description do not possess desirable chemoresistance and are destroyed even by diluted aqueous solutions of organic acids, such as formic acid, acetic acid or lactic acid.

Patent description US6420496 discloses in turn the curing agent for epoxy resins prepared by a reaction of a phenol, in particular t-butylphenol, with an aldehyde, followed by a reaction with a di- or polyamine, such as 1,3-benzenedimethanamine (MXDA), trimethylhexamethylenediamine (TMD) or N-(2-aminoethyl)-N'-{(2-amino-ethyl)-1,2-ethanediamine (TEPA). The product thus obtained is further reacted with a proton donor. However, use of such a curing agent requires elevated temperatures, such as 100°C, its viscosity is too high (even above 6000 mPas), and the color is undesirable and variable (from 5 to 15 G).

As a rule, the curing agents based on a Mannich base are rather very viscous and are not suitable for coating without an additional diluent.

Therefore, curing agents, which would be suitable for cold curing, and would also preferably exhibit the required low viscosity have been intensely searched for.

Systems of cold-cured epoxy resins are suitable for a wide range of industrial applications, in particular, in the construction industry to prepare floorings, mortars, cements, coatings, varnishes and paints, or used in the shipbuilding industry. Amine curing agents are named among the proposed curing agent compositions. For example, liquid epoxy resins cured with curing agents based on amines are commonly used in shipyards, which are often localized in the regions where severe winters occur. In such situations the epoxy resin based coating/paint is often applied at about 5°C or lower. However, in the case of the above mentioned applications, not only the form of the epoxy resin composition determines its applicability. Numerous amino-epoxy coatings in low, and especially in negative Celsius temperatures, undergo curing very slowly and often require the time period considerably exceeding 24 hours. As a result, when it is desirable, a second layer can be applied only after the tack-free state is reached. Therefore slow curing can influence significantly productivity of a shipyard, or a construction progression. Thus, apart from the low viscosity at low temperatures, it is very desirable for the amine curing agents to be preferably characterized by an increased curing rate and lack of crystallization.

The mere use of amine compounds with a multifunctional amine, that is one having three or more amine hydrogens active in the curing/crosslinking process of the epoxy resins, is well known in the art for such applications. In the coating applications, amine cured epoxy compositions are in general cured at a room temperature or lower, while being expected to yield a coating of high mechanical strength, resistant to chemical compounds and corrosion-resistant, and with excellent adhesive properties. Therefore, they are often used as primer and/or top layers, especially in shipbuilding or construction industry applications, for coating surfaces such as bridges, metal structures or ship hulls.

For applications in which obtaining coatings under cold conditions is essential, the amine curing agents for epoxy resins based on unreacted phenols are recognized as particularly appropriate. Their applicability for other uses, for example in the food industry, is limited due to a fact that they contain benzyl alcohol or phenol as a modifying agents, which are organic compounds migrating from the coatings, even after they are cured, and therefore recognized as adverse substances, which increase a risk of a direct fertility impairment. However, in applications in the construction or shipbuilding industries, the curing agent systems which do not carry volatile organic compounds are characterized by harshly high viscosity, unfavorable surface appearance and relatively long curing times. These inconveniences are most often eliminated just by adding alkylphenol, such as, for example, nonylphenol or p-t-butylphenol, or bisphenol A. Such additives act as plasticizers and can lower the glass transition temperature (Tg) of the preparation, while it should kept in mind that said additives are also not free of disadvantages listed above for alkylphenols and phenols, which are used during amine curing.

Moreover, the cold-cured curing agents are also admixed with free amines. However, excessive levels of the free amines in the curing agent can result in whitening or reddening of the coatings during the curing process of the epoxy resin. The problem could be solved by use of isolated adducts in the curing agents. In such a case, while generally it can result in good properties of the curing agent, isolation of the adduct entails removing the whole amount of unreacted amines by vacuum distillation, a time- and energy-consuming process, with relative increase in costs of obtaining the final product.

However, liquid epoxy-amine compositions many a time do not meet requirements concerning elasticity of the obtained coatings. For example, high elasticity is a prerequisite for providing a desired impact resistance of surface coatings. This is particularly important not only in the shipbuilding industry, but also in civil engineering applications, when surfaces, such as the concrete and other cement materials, are coated. For the latter application, it is also extremely essential for the coated products to withstand higher pressures of expansion and contraction.

In addition, continuity of the coatings, lack of defects, high resistance against chemical and mechanical agents result directly in other highly desirable properties of the final product, such as corrosion resistance, weather resistance and the like.

Further problems observed in case of the amino-epoxy coatings is the above-mentioned whitening and/or reddening effect. Such problems are often associated with incompatibility of the amine curing agent with the epoxy resin, which is further associated with phase separation observed upon curing and migration of amines to the coating surfaces, to react further with $CO_2$ present in the air. In consequence of this process, a greasy superficial layer may form, or exudates as well as reddening may appear on the surface, which not only impair appearance of the coatings, but also weaken their mechanical properties. The problem of incompatibility of the amine curing agent with the epoxy resin is essential, in particular in the case of applying and curing the coatings at the lowered temperatures.

WO 2015/117846 A1 discloses epoxy resin compositions for coatings, the compositions comprising a mixture of amine curing agents and being curable at low temperatures.

The Mannich base amine curing agents known in the prior art (including phenolamines), as well as amine adducts, do not comply with all requirements laid down for the epoxy resins curing agents, and consequently do not solve all problems indicated in the art, as briefly discussed above.

Therefore, there still exists a need for new amine curing agents that can be cured in a wide range of temperatures, including curing under cold conditions. These desired new amine curing agents will not crystallize during storage, and, moreover, after sufficiently long storage, including storage at low temperatures, they will exhibit the desired low viscosity, preferably lower than 300 mPas at 25°C. Furthermore, these desired new amine curing agents will provide coatings of the required characteristics, in particular coatings free of any defects having high mechanical and chemical resistance. Finally the epoxy resin curing process in which said new amine curing agents will be employed will be fast.

The present invention aims to provide such a desirable curing agent for epoxy resins, as mentioned above, that is capable of being stored and used in low temperatures, compatible with epoxy resins and resulting in ideal coatings, which are free of any curing defects.

SUMMARY OF INVENTION

The present invention provides a curing agent for epoxy resins comprising polyamines and a compound of acidic character, wherein said curing agent comprises a mixture of a primary aliphatic diamine in the amount of 3 to 7% w/w, a primary aliphatic-aromatic diamine in the amount of 34 to 38% w/w and a compound of acidic character, that is a compound containing at least one hydroxy group attached to at least one aromatic ring, in the amount of 49 to 59% w/w, in combination with an aliphatic polyamine in the amount of 1 to 10% w/w, preferably in the amount of 3 to 10% w/w, more preferably from 3 to 8% w/w. Most preferably, the primary aliphatic diamine is present in the amount of 5% w/w.

In a preferred embodiment of the invention the primary aliphatic-aromatic diamine is present in the amount of 36% w/w. In another preferred embodiment of the invention the compound of acidic character is present in the amount of 52 do 56% w/w, more preferably in the amount of 54% w/w. Still in another preferred embodiment the aliphatic polyamine is present in the amount of 5% by weight.

The preferred aliphatic diamine according to the invention is the aliphatic diamine containing in the aliphatic chain from 3 to 8 carbon atoms, more preferably 6 carbon atoms. In the most preferred embodiment, the aliphatic diamine is selected from a group consisting of 2,2,4-trimethyl-1,6-diaminohexane, 2,4,4-trimethyl-1,6-diaminohexane, and a combination thereof.

The preferred aliphatic-aromatic diamine according to the invention is 1,3-bis(aminomethyl)benzene.

The preferred compound of acidic character containing at least one hydroxy group attached to at least one aromatic ring is butylphenol, more preferably 4-tert-butylphenol.

The preferred aliphatic polyamine is pentamine, more preferably tetraethylenepentamine.

In a particularly preferred embodiment the curing agent according to the invention comprises a mixture of 2,2,4-trimethyl-1,6-diaminohexane or 2,4,4-trimethyl-1,6-diaminohexane or a combination thereof in the amount of 5% w/w, 1,3-bis(aminomethyl)benzene in the amount of 36% w/w, 4-tert-butylphenol in the amount of 54% w/w and tetraethylenepentamine in the amount of 5% w/w.

The present invention also provides a composition of the curing agent, wherein said composition comprises the curing agent according to the invention in combination with one or more additives selected from fire retardant additives, diluents, fillers, rheology modifying additives, antifoaming agents, colorants, pigments, viscosity modifiers or impact resistance enhancers, fireproof additives, additives enhancing adhesion to fibrous materials and antioxidants.

The invention provides also a composition of the epoxy resin comprising at least one epoxy resin and the curing agent of the invention or the composition of the curing agent of the invention. Preferably, in the epoxy resin composition according to the invention the curing agent and the epoxy resin are present in the ratio in the range of from 35:100 parts by weight to 45:100 parts by weight, preferably 36:100 to 41:100 parts by weight, most preferably in the ratio of 39:100.

However, a person skilled in the art will easily select an appropriate ratio of the curing agent depending on the epoxy resin used and the application thereof. Said appropriate curing agent/epoxy resin ratio results directly from stoichiometry of the reaction between the epoxy groups and amino groups, taking into account a fact that in the process of curing resins with amines, each hydrogen atom of the amino group reacts with one epoxy group.

To calculate the stoichiometric ratio of resin to curing agent, information concerning the content of active hydrogen atoms is required, which is determined routinely by the person skilled in the art based on the hydrogen equivalent. For example, the amount of the curing agent per 100 parts by weight of the resin is calculated according to the following equation:

$$parts\ of\ the\ curing\ agent\ per\ 100\ parts\ of\ resin = \frac{hydrogen\ equivalent\ of\ amines \times 100}{epoxy\ equivalent}$$

It will be obvious for a person skilled in the art to avoid use of the curing agent in the excess of the stoichiometric amount, since it can lead to reduced water resistance of the cured resin, as well as in the softening effect and decrease of deflection temperature. Similarly, it is obvious for the person skilled in the art that use of the curing agent in the amount smaller than stoichiometric results in remaining free epoxy groups, which in turn has an effect on inferior resin crosslinking and can decrease the thermal strength, chemical resistance and weaken the dielectric properties of the resin.

The present invention further provides use of the curing agent according to the invention for curing the composition comprising at least one epoxy resin. According to the invention such curing is carried out preferably at the temperature in the range of from + 25 to -20 °C, more preferably from + 20 to -15°C, most preferably from + 5 to -10°C. In the preferred embodiment the curing process is carried out on a moist surface.

As indicated above, the curing agent for epoxy resins according to the invention can be used with other, commonly used additives, which are known to a person skilled in the art of the epoxy resin curing. Such additives can influence numerous parameters of the epoxy system comprising the resin and the curing agent, and in particular they can change the curing profile of the epoxy system.

In particular, such additives comprise additives for enhancing workability of the uncured epoxy systems and additives for adjustment of thermal and mechanical properties of the thermoset products made therefrom. Moreover, such additives comprise, for example, diluents, fillers, rheology modifying additives, such as thixotropic or dispersing agents, antifoaming agents, colorants, pigments, viscosity modifiers, impact resistance enhancers or fire retardant additives.

These and other related objects of the invention, which were obtained thanks to the solutions proposed by the present inventors, are illustrated hereinbelow in the examples of practical implementation of the invention in reference to the drawings, wherein:

Fig. 1 shows photographs of dry concrete surfaces covered by epoxy-amine resin coatings obtained by using the curing agents having compositions identified as (a) sample 4, (b) sample 16, (c) sample 0 and (d) sample of the invention;

Fig. 2 shows photographs of wet concrete surfaces covered by epoxy-amine resin coatings obtained by using the curing agents having compositions identified as (a) sample 4, (b) sample 16, (c) sample 0 and (d) sample of the invention;

Fig. 3 shows photographs of dry concrete surfaces covered by epoxy-amine resin coatings obtained by using the curing agents having compositions identified as (a) sample 4, (b) sample 16, (c) sample 0 and (d) sample of the invention, after surface adhesion test performed after curing for 48 hours;

Fig. 4 shows photographs of dry concrete surfaces covered by epoxy-amine resin coatings obtained by using the curing agents having compositions identified as (a) sample 4, (b) sample 16, (c) sample 0 and (d) sample of the invention, after surface adhesion test performed after curing for 5 days;

Fig. 5 shows photographs of wet concrete surfaces covered by epoxy-amine resin coatings obtained by using the curing agents having compositions identified as (a) sample 4, (b) sample 16, (c) sample 0 and (d) sample of the invention, after surface adhesion test performed after curing 48 hours;

Fig. 6 shows photographs of wet concrete surfaces covered by epoxy-amine resin coatings obtained by using the curing agents having compositions identified as (a) sample 4, (b) sample 16, (c) sample 0 and (d) sample of the invention, after surface adhesion test performed after curing for 5 days;

Fig. 7 shows diagrams of DSC temperature relationships for the epoxy resin samples cured by applying various curing agents recorded after curing of the samples for 24 hours at room temperature;

Fig. 8 shows diagrams of DSC temperature relationships for the epoxy resin samples cured by applying various curing agents recorded after curing of the samples for 7 days at room temperature.

The working examples are presented hereinbelow for illustrative purposes only and should not be considered as limiting the scope of the invention in any way.

DEFINITIONS

Definitions of the terms useful for understanding of the disclosure of the present description are summarized below. However, it should be emphasized that in a situation of incompatibility of these meanings with the meanings encountered in the relevant literature, the presently indicated meanings take precedence. Commonly employed terms "method" and "process" have equivalent meanings.

Contents of all ingredients are given in weight percent, unless expressly indicated otherwise. The terms "% by weight" and "% w/w" employed herein refer to the percentage of the ingredient in reference to the total weight of the composition.

According to the present description the terms "aliphatic compound" and "aliphatic moiety" incorporates saturated or unsaturated, straight (i.e. non-branched) or branched aliphatic hydrocarbons. It will be apparent to a person skilled in the art that the term "aliphatic" includes, but is not limited to, alkyl, alkenyl, alkynyl residues. According to the present invention alkyl groups constitute particularly preferred examples of aliphatic moieties. The term "alkyl" or "alkyl group" comprises respectively straight and branched alkyl groups. According to the present invention lower alkyl aliphatic hydrocarbons containing 1-6 carbon atoms in the hydrocarbon chain constitute particularly preferred examples of alkyl groups.

The aliphatic amine according to the present description is any aliphatic compound or aliphatic moiety having the amino group attached directly to the aliphatic chain. The primary aliphatic amine is an aliphatic amine comprising the primary amino group(s), that is the $-NH_2$ group(s). The secondary aliphatic amine is an aliphatic amine comprising at least one secondary amino group, that is the -NH- group.

The cycloaliphatic amine according to the present description is any aliphatic amine, in which at least some of carbon atoms form at least one closed, saturated, non-aromatic ring. According to the present invention it should be understood that the cycloaliphatic amine is a special case of the aliphatic amine.

The aliphatic diamine is any aliphatic amine, including the cycloaliphatic amine, comprising two amino groups. The particularly preferred aliphatic diamine is the aliphatic diamine, the most preferred aliphatic diamine is trimethyl-1,6-diaminohexane.

The aliphatic polyamine according to the present invention can be any aliphatic amine comprising more than two amino groups. Amino groups present in the aliphatic polyamine can be both primary and secondary amino groups. The particularly preferred aliphatic polyamines according to the present invention are such aliphatic polyamines, in which primary and secondary amino groups are present. An example of such an polyamine is tetraethylenepentamine.

The aromatic ring means a planar ring containing orbitals p perpendicular to the ring plane at each ring atom and fulfilling Hückel's rule, according to which a number of pi electrons in the ring equals (4n+2), where n is an integer. The phenyl ring is an exemple of the aromatic ring according the present invention.

The aromatic moiety according to the present invention can be any compound comprising an aromatic ring.

The aliphatic-aromatic amine according to the present description is any compound, in which the amino group is attached to the aromatic ring, preferably to the phenyl ring, by an aliphatic bridge (moiety), such as, for example, a methylene or ethylene bridge.

The aliphatic-aromatic polyamine according to the present invention may be any aliphatic-aromatic amine comprising more than one amino group. The particularly preferred aliphatic-aromatic polyamine is an aliphatic-aromatic diamine, most preferably 1,3-bis(aminomethyl)benzene.

Other polyamines suitable for use include, *inter alia,* ethylenediamine, diethylenetriamine, triethylenetetramine, tetraethylenepentamine, propylenediamine, dipropylenetriamine, diethylaminopropylamine or combinations thereof.

As emphasized many times before, the epoxy resin is a type of a synthetic resin, which is capable of forming non-melting and insoluble plastics by means of the crosslinking reaction, in which epoxy moieties are involved. Particularly useful epoxy resin for use according to the present invention is a resin comprising a reaction product of bisphenol A with epichlorohydrin, such as, for example, the Epidian resin, in particular Epidian 6, commercially available from Ciech Sarzyna SA. However, in the composition according to the present invention, any other epoxy resins can be used.

DESCRIPTION OF EMBODIMENTS

To demonstrate high utility of the amine curing agent according to the present invention, a comparative study was carried, in which the properties of the curing agent of the invention were compared with the properties of other curing agents, including the curing agents commercially available, as well as the curing agents comprising a base mixture of 4-tertbutylphenol, 1,3-bis(aminomethyl)benzene and 2,2,4- or 2,4,4- trimethyl-1,6-diaminohexane with various additives.

*Example 1 - Preparation of curing agent samples*

4-tertbutulphenol was dissolved in 1,3-bis(aminomethyl)benzene (MXDA) in temperature of 50-55°C. Following the complete dissolution of phenol, the remaining raw materials were added to the mixture in temperature not exceeding 50°C and at the ratios listed in Table 1. The obtained mixtures were used in further studies without any additional modifications.

Table 1

| Sample No. / Components | Sample 1 | Sample 2 | Sample 3 | Sample 4 | Sample 5 | Sample 6 | Sample 7 | Sample 11 | Sample 12 | Sample 13 | Sample 14 | Sample 15 | Sample 16 | Sample 17 | Sample 18 | Inv. Sample * |
|---|---|---|---|---|---|---|---|---|---|---|---|---|---|---|---|---|
| 4-tertbutylphenol | 57 | 57 | 57 | 49 | 57 | 57 | 57.2 | 53.1 | 54 | 55.2 | 56.1 | 56 | 54 | 52.1 | 58.1 | 54 |
| MXDA | 36 | 36 | 36 | 36 | 36 | 36 | 36 | 36 | 36 | 36 | 36 | 36 | 36 | 36 | 36 | 36 |

| Sample No. / Components | Sample | Sample | Sample | Sample | Sample | Sample | Sample 7 | Sample 11 | Sample | Sample 12 | Sample 14 | Sample | Sample | Sample 17 | Sample 18 | Inv. Sample |
|---|---|---|---|---|---|---|---|---|---|---|---|---|---|---|---|---|
| TMD | 5 | 5 | 5 | 5 | 5 | 5 | 5 | 5 | 5 | 5 | 5 | 5 | 5 | 5 | 5 | 5 |
| Dodecylphenol | - | - | - | 10 | - | - | - | 5 | 5 | - | - | - | - | 6 | - | - |
| Benzyl a. | - | - | 0.8 | - | - | - | 0.9 | 0.9 | | 0.9 | 0.9 | | | 0.9 | 0.9 | |
| TEPA | - | - | - | - | - | - | - | - | - | - | - | - | - | - | - | 5 |
| AEP | - | - | - | - | - | - | - | - | - | - | - | - | 5 | - | - | - |
| Dowanol PMA | 2 | - | 1.2 | - | - | - | - | - | - | - | - | - | - | - | - | - |
| Dowanol PM | - | 2 | - | - | - | - | - | - | - | - | - | - | - | - | - | - |
| Propylene carbonate | - | - | - | - | - | 2 | - | - | - | - | - | - | - | - | - | - |
| Glycerol | - | - | - | - | 2 | - | - | - | - | - | - | - | - | - | - | - |
| Butyloglycol | - | - | - | - | - | - | 0.9 | - | - | 0.9 | - | - | - | - | - | - |
| Mpdiol | - | - | - | - | - | - | - | - | - | 2 | 2 | 3 | - | - | - | - |

*sample according to the present invention

The curing agent samples were tested in the real storage conditions to assess the crystallization degree of the curing agent. In the course of the study, the air temperature was unsettled and ranged from + 5 to -10°C.

Additionally, the samples were tested in the refrigerating conditions. The temperature of the refrigerator was kept at a constant level of +7°C.

In the study, the crystallization of the mixture was investigated during storage for a period of four weeks (28 days).

While all samples stored at the lower, constant temperature of 7°C retained their desirable liquid character and did not crystallize, the samples stored in the real conditions, in which the temperature was changeable and varied between +5 and -10°C, developed cloudiness, and subsequently crystallization. The observation results of test carried out in the real conditions are listed in Table 2 below.

Table 2

| Number of days / Sample No. | 1 | 4 | 5 | 6 | 8 | 11 | 14 | 28 |
|---|---|---|---|---|---|---|---|---|
| Sample 1 | OK | • | • | • | • | • | • | • |
| Sample 2 | OK | • | • | • | • | • | • | • |
| Sample 3 | OK | OK | OK | 0 | • | • | • | • |
| Sample 4 | OK | OK | OK | OK | OK | OK | OK | OK |
| Sample 5 | OK | 0 | • | • | • | • | • | • |

| Number of days / Sample No. | 1 | 4 | 5 | 6 | 8 | 11 | 14 | 28 |
|---|---|---|---|---|---|---|---|---|
| Sample 6 | OK | OK | • | • | • | • | • | • |
| Sample 7 | OK | 0 | • | • | • | • | • | • |
| Sample 11 | OK | OK | OK | OK | 0 | • | • | • |
| Sample 12 | OK | OK | • | • | • | • | • | • |
| Sample 13 | OK | 0 | • | • | • | • | • | • |
| Sample 14 | OK | OK | • | • | • | • | • | • |
| Sample 15 | OK | OK | OK | 0 | • | • | • | • |
| Sample 16 | OK | OK | OK | OK | OK | OK | OK | OK |
| Sample 17 | OK | OK | OK | 0 | • | • | • | • |
| Sample 18 | OK | 0 | • | • | • | • | • | • |
| Inv. Sample | OK | OK | OK | OK | OK | OK | OK | OK |

Key:
OK – clear non-crystallized sample
0 – slightly turbid sample, slight crystallization
• – entirely crystallized sample

As can be seen from the conducted studies, only three out of the 19 tested samples satisfied the requirement of maintaining the form of clear low viscosity liquid of the desirable clear color after storing the samples at varying temperatures in the range of + 5 do -10 °C for a period of 28 days.

Thus it was demonstrated that apart from the sample of the curing agent according to the invention, which comprises the curing agent base consisting of 4-tertbutylphenol, 1,3-bis(aminomethyl)benzene and trimethyl-1,6-diaminohexane in combination with tetraethylenepentamine, only two other samples did not crystallize, said other samples comprising the curing agent base as identified above, in combination with dodecylphenol as a phenol, and N-aminoethylpiperazine as a cycloaliphatic amine, respectively.

Consequently, subsequent comparative studies took into account only these three samples and commercially available curing agent samples, in particular, including the curing agent comprising base components of the following composition: 58.1% by weight of 4-tertbutylphenol, 36% by weight of 1,3-bis(aminomethyl)benzene, and 5% by weight of trimethyl-1,6-diaminohexane, and 0.9% of benzyl alcoholu, denoted further as Sample 0.

*Example 2 - Mechanical testing of curing agent samples*

To verify utility of the curing agent according to the invention, its viscosity and gelling time were measured and the results compared with the remaining, non-crystallizing samples and the base curing agent MTB.

o Viscosity: The measurement was conducted by the cone-plate method, on the rotating viscometer of Brookfield CAP 2000+ type with the thermoregulated plate, the spindle No. 1 at 25°C with the shear rate of 6667 $s^{-1}$ (second to the minus one power)

o Amine number: The measurement was conducted by the classical titration method using the Dosimat 775 device from Metrohm, by direct titration of amino groups with 0.1 M solution of hydrochloric acid against the bromocresol green as the indicator until change of the color to yellow was observed, and the value was calculated as mg KOH per g of the sample

o Gelling time: The measurement of gelling times was conducted at ambient temperature (21°C). The measurement employed a commercially available Epidian 6 epoxy resin comprising the reaction product of bisphenol A with epichlorohydrin of the average molecular weight $\leq$ 700. The temperature of the curing agent samples of the resin was adjusted to ambient temperature. After the ambient temperature was reached, 100 g of the composition was weighed out to the 150 cm$^3$ beaker at the ratio listed in Table 4. After thorough mixing of the contents in the beaker, the stopwatch was started. During the measurement, the contents of the cup were stirred from time to time with a glass rod to check whether resin threads could be drawn from the mixture. The consistency was checked every 15 seconds. The final moment of the measurement was accepted to be the moment when the composition could not be stirred and the resin threads drawn from it were breaking.

The results obtained are listed in Table 3 below.

Table 3.

| Sample | Sample 0 | Sample 4 | Sample 16 | Inv. Sample |
|---|---|---|---|---|
| Viscosity at 25 °C - CAP [mPas] | 321 | 112 | 191 | 227 |
| Amine number [mgKOH/g] | 334 | 336 | 380 | 382 |
| Gelling time [min] with Epidian 6 - a sample weighing 100 g | 14 | 15 | 13 | 14 |

Both viscosity and gelling times determined for all tested samples are sufficient to confirm their potential applicability as the curing agent for the epoxy resin composition. However, as indicated in Table 3, the viscosity measured for the samples of the curing agent according to the invention (Inv. Sample) is lower than in the case of the starting composition (Ex. 0) without the aliphatic polyamine additive. The viscosity parameter determined for the samples according to the invention confirms the handling ease of the curing agent. Simultaneously, the gelling time corresponding to the reactivity of the epoxy resin/curing agent mixture is more favourable in the case of the sample of the invention than in case of the sample 4 of the curing agent, which comprises dodecylphenol instead of the tetraethylenepentamine (TEPA) additive. The only composition with the prognosis better than the curing agent composition according to the invention, is the curing agent sample 16, comprising in its composition N-aminoethylpiperazine, instead of tetraethylenepentamine (TEPA) present in the composition of the invention.

*Example 3 - Mechanical testing of curing agent samples*

The non-crystallizing samples tested previously as investigated in Example 2, including the sample according to the invention and the two comparative samples (Sample 4 and Sample 16), were subjected to further tests, along with other comparative samples based on the base Sample 0 and the commercially available curing agent Telalit 0846.
Telalit 0846, in contrast to the other curing agents, including, in particular, the MTB curing agent, is the curing agent based on a Mannich base, comprising in its composition the three compounds present also in the base Sample 0: 4-tert-butylphenol, 1,3-bis(aminomethyl)benzene (MXDA) and 2,2,4- or 2,4,4-trimethylhexane-1,6-diamine (TMD). This curing agent is intended to coat surfaces at lower temperatures, however it is not free from disadvantages. First, the surfaces coated with the resin using Telalit as the curing agent, display varying color from bright yellow to brown. Moreover, this curing agent is characterized by at least two times higher viscosity (over 500 mPas) in comparison to the curing agent according to the invention.
The curing process of the resins and epoxy compositions with the use of the tested curing agents was carried out in room temperature for the period of 7 days. To this end, the reaction vessel was charged with the appropriate amount of Epidian 6 epoxy resin and with the corresponding amount of the curing agent in the ratio to Epidian 6 as listed in Table 4. Following mixing of the reagents, the mixture was removed from the vessel and transferred to the mould which was left for 7 days in the room temperature to cure the resin. After 7 days the samples were removed from the mould, any superficial sharp deformations were smoothed and subsequently the samples were subjected to numerous mechanical tests to confirm their physical-chemical properties, including, in particular, their mechanical resistance and strength. All tests were carried out by standard methods according to commonly known standards (as indicated in Table 4). The obtained results are presented in following Table 4.

Table 4

| | | Mechanical tests with Epidian 6 (curing: 7 days at RT) | | | | | |
|---|---|---|---|---|---|---|---|
| | | *The curing agent Sample 0* | *The curing agent Sample 18* | *The curing agent Sample 4* | *The curing agent Sample 16* | *The curing agent Inv. Sample* | *Telalit 0846* |
| **Epidian 6:curing agent ratio** | | 100:45 | 100:45 | 100:45 | 100:41 | 100:39 | 100: 45 |
| **Parameter** | **Unit** | | | | | | |
| Elasticity modulus (determined according to the standards: PN-EN ISO 527-1:1998 and PN-EN ISO 527-2:1998) | MPa | 3940 | 4020 | 4010 | 4580 | 4230 | 4250 |
| Relative elongation at break (determined according to the standard: PN-EN ISO 527-1: 1998) | % | 2.3 | 3.5 | 2.3 | 1.6 | 2.9 | 1.6 |
| Tensile strength (determined according to the standards: PN-EN ISO 527-1:1998 and PN-EN ISO 527-2:1998) | MPa | 64.3 | 70.2 | 70.7 | 55.4 | 70.1 | 55.9 |
| Tension at break (determined according to the standards: PN-EN ISO 527-1:1998 and PN-EN ISO 527-2:1998) | MPa | 63.5 | 63 | 70.2 | 54.8 | 67.1 | 54.5 |
| Flexural modulus (determined according to the standard: PN-EN ISO 178:2006) | MPa | 3700 | 4020 | 3970 | 4040 | 3800 | 3810 |
| Flexural strength (determined according to the standard PN-EN ISO 178:2006) | MPa | 98.4 | 108 | 119 | 116 | 116 | 86.7 |
| Deflection (determined according to the standard PN-EN ISO 178:2016) | mm | 6.2 | 6.3 | 6.6 | 6.6 | 7.3 | 3.9 |
| Compression strength (determined according to the standard PN-EN ISO 604:2006) | MPa | 91.7 | 101 | 108 | 104 | 101 | 104 |
| Deflection temperature under load (determined according to the standards: PN-EN ISO 75-1 and PN-EN ISO 75-2) | °C | 46.3 | 49.6 | 49.5 | 50.9 | 56.7 | 50.8 |
| Barcol hardness (determined according to the standard: ASTM-D 2583-07) | °B | 29 | 27 | 28 | 27 | 34 | 28 |
| Brinell hardness (determined according to the standard: ASTM/D 2583-07) | MP a | 122 | 131 | 141 | 134 | 123 | 132 |

(continued)

| | | Mechanical tests with Epidian 6 (curing: 7 days at RT) | | | | | |
| | | *The curing agent Sample 0* | *The curing agent Sample 18* | *The curing agent Sample 4* | *The curing agent Sample 16* | *The curing agent Inv. Sample* | *Telalit 0846* |
|---|---|---|---|---|---|---|---|
| **Epidian 6:curing agent ratio** | | 100:45 | 100:45 | 100:45 | 100:41 | 100:39 | 100:45 |
| **Parameter** | **Unit** | | | | | | |
| Non-notched impact strength (determined according to the standard: PN-EN ISO 179-1: 2004) | kJ/m$^2$ | 28 | 44 | 38 | 28 | 36 | 9.5 |

As it can be seen from the data presented in Table 4 above, the sample of the cured epoxy-amine resin obtained by using the curing agent according to the invention demonstrates excellent physical-chemical parameters, as expected for the preparations for use in the construction or shipbuilding industry applications, including, in particular, the excellent elasticity, confirmed both upon stretching and bending, and the strength exhibited, *inter alia,* in the measurements of the relative elongation or flexural and tensile strength. The sample according to the invention has also almost the highest flexural and tensile strength and the highest deflection temperature under load. Moreover, the impact strength of the sample according to the invention is high, considerably higher than in the case of the base Sample 0 and Telalit 0846, as being confirmed by the resistance of the material against breaking at the dynamic load. Moreover, the highest value of hardness determined in the comparative test of the Barcol hardness measurement confirms that for the samples according to the invention the highest degree of curing is observed. Similarly, the Brinell hardness parameter indicates that the sample according to the invention is highly resistant against permanent deformation and demonstrates resistance comparable to other modified curing agents, such as Samples 4 and 16, and higher than the base Sample 0.

*Example 4 - Assessment of the epoxy resin-coated surface morphology on dry and wet concrete*

Samples of dry concrete and samples of a wet concrete obtained by soaking the samples of dry concrete in water for 6 hours, were coated with epoxy resin, as described above in Example 3. To this end, the Epidian 6 epoxy resin was mixed with an appropriet amount of the curing agent in the ratio to Epidian 6 as indicated in Table 4, and subsequently applied onto the concrete surface. The resins were cured for 7 days at room temperature. The cured coatings obtained were assessed with respect to the surface coating quality.

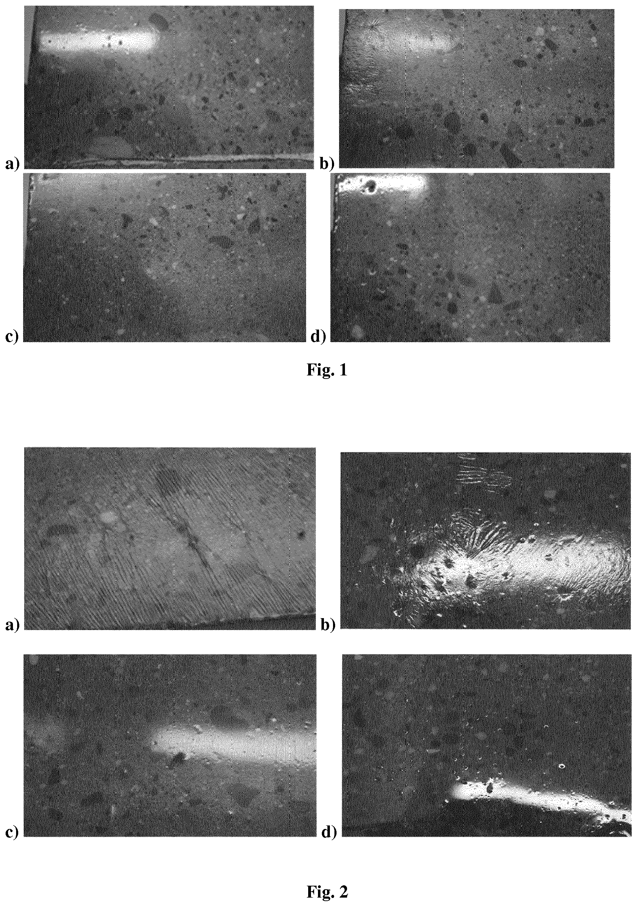

Examples of photographs of the dry concrete samples covered respectively with the epoxy resin cured by using the curing agents having compositions identified as (a) sample 4, (b) sample 16, (c) base sample 0 and (d) the curing agent according to the invention, are shown on Fig. 1. As can be seen on the photographs, the sample 4 (Fig. 1 (a)) and sample according to the invention (Fig. 1 (d)) provide essentially smooth, even coating with high gloss, without evident fogging, as well as other curing defects, such as, for example, creases, spots or gaps. In the case of the sample 16 (Fig. 1 (b)) and sample MTB (Fig. 1 (c)) slight creases of the coating can be observed, which most probably appeared due to moisture present in the air. In addition, in case when these two curing agents are used, and in particular when the base Sample 0 is used, the obtained coating is slightly matt.

In the case of coatings applied to the surface of the wet concrete, only the curing agent according to the invention (Fig. 2 (d)) ensures that coatings with desirable morphology are obtained. The surface of the wet concrete coated with the epoxy resin coating, cured by using the curing agent according to the invention, is smooth, even, and devoid of any defects and characterized by high gloss. Surfaces coated by using other curing agents (sample 4 - Fig. 2 (a)), sample 16 - Fig. 2 (b)) and sample 0 - Fig. 2 (c)) are turbid and devoid of gloss. Additionally, as can be seen from Fig. 2 (a) and Fig. 2 (b), in the systems where compositions of ingredients indicated as Sample 4 and Sample 16 were used as the curing agents, numerous irregularities and creases formed on the coating surfaces. Moreover, even small discontinuities (breaks) are observed in the coated surface. Thus, in the case of moist surfaces only the curing agent according to the invention provides coatings with the desired properties and characteristics.

*Example 5 - Substrate adhesion studies*

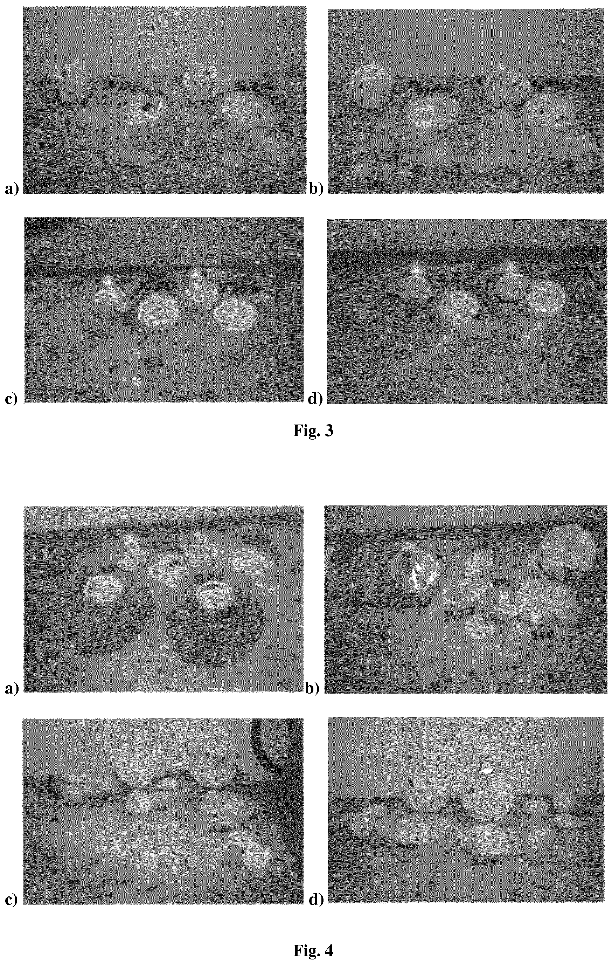

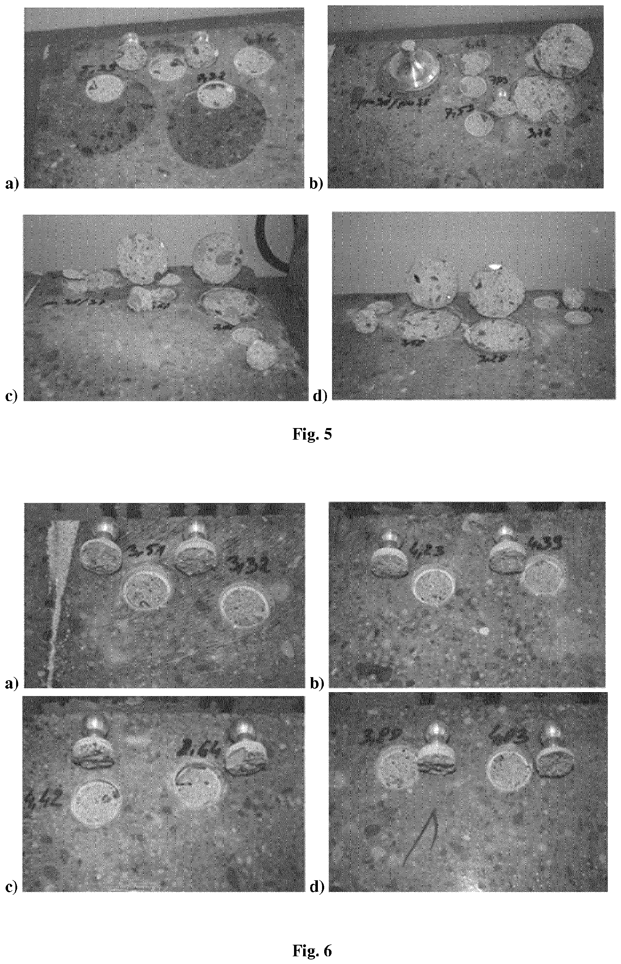

The substrate adhesion studies were conducted on both dry and wet concrete. The studies were carried out for the concrete surfaces coated with the epoxy resin, as described in Example 4 above. The resins were cured, as indicated in Example 4, for 7 days at room temperature. Subsequently, to the surface on the concrete coated with a layer of the resin, aluminium mushroom-shaped dollies of 20 mm and 50 mm diameter, as seen on Fig. 3 to Fig. 6, were attached with the adhesive layer made from the commercially available adhesive prepared by mixing Epidian 6 with curing agent z-1 in an appropriate ratio. The adhesive layer used was selected so that it would be characterized by higher tensile strength than the epoxy resin coating and B25 concrete used, for which the minimum indicated value is 1.5 MPa. Thus, higher adhesion of the mushroom-shaped dolly to the concrete was provided than given by its cohesion.

The mushrooms-shaped dollies were torn off from the concrete by means of the pull-off adhesion meter PosiTest AT-A from DeFelsko. The force values necessary to tear off/pull out the mushroom-shaped dollies from the concrete, obtained by the measurements carried out with the mushrooms-shaped dollies having 20 mm and 50 mm diameters on a dry and wet concrete are listed in the following Tables 5 and 6.

Dry concrete

Table 5.

| Size of a mushroom-shaped dolly | Adhesion [MPa] | | |
| --- | --- | --- | --- |
| | 20 mm | | 50 mm |
| Sample | after 2 days | after 5 days | after 5 days |
| Sample 0 | 5.9 | 6.67 | 3.14 |
| | 5.52 | 7.88 | > 3.8 |
| Sample 4 | 3.37 | 5.39 | - |
| | 4.76 | 7.32 | - |
| Sample 16 | 4.68 | 7.03 | 3.78 |
| | 4.24 | 7.53 | > 3.8 |
| Inv. Sample | 4.67 | 6.23 | 3.28 |
| | 5.52 | 8.72 | 3.52 |

Wet concrete (soaked in water for 6 h)

Table 6.

| Size of a mushroom-shaped dolly | Adhesion [MPa] | | |
| --- | --- | --- | --- |
| | 20 mm | | 50 mm |
| Sample | after 2 days | after 5 days | after 5 days |
| Sample 0 | 5.9 | 6.67 | 3.14 |
| | 5.52 | 7.88 | > 3.8 |
| Sample 4 | 3.37 | 5.39 | - |
| | 4.76 | 7.32 | - |
| Sample 16 | 4.68 | 7.03 | 3.78 |
| | 4.24 | 7.53 | > 3.8 |
| Inv. Sample | 4.67 | 6.23 | 3.28 |
| | 5.52 | 8.72 | 3.52 |

The photographs illustrating the performed studies are presented in Figs 3-6. As can be seen in Figs 3-6, tearing a mushroom-shaped dolly off occurs each time in the area of the concrete, and not in the area of the coating or at the boundary of the concrete and the coating. This is a confirmation of the fact that adhesion to the concrete surface of the epoxy resin obtained by using all samples as the curing agent, in particular including the sample according to the invention, is greater than the tensile strength of the concrete.

*Example 5 - Glass transition temperature measurement*

100 g of the composition (the resin + the curing agent) in an appropriate ratio as shown in Table 7 below was weighed out into a reaction vessel of 150 $cm^3$ volume. The study involved the curing agent samples 0, 4, 16 and the sample according to the invention, and samples of the commercially available curing agents - Telalit 0846 and TFF.

The TFF curing agent, like Telalit 0846, is a high-viscosity curing agent of the Mannich base type, aimed at curing epoxy compositions in conditions of lower temperature of about 5°C, and high humidity. However, just like Telalit 0864, it is not devoid of disadvantages, including in particular high colour in the Gardner scale. Moreover, as mentioned above, a process of preparation of the Mannich base type curing agents is considerably more time-consuming and expensive. In particular, the process for obtaining TFF is a process combined of several steps, which require use of a precisely defined temperature regime, maintaining appropriate cooling and stirring, and use of the vacuum distillation. Moreover, the viscosity of the Mannich base type curing agents (Telalit 0864 and TFF) is considerably higher than the viscosity determined for the composition of the curing agent according to the present invention and the base Sample 0 (about 5-6 thousand mPas as compared with values lower than 500). Such a high viscosity is undesirable, especially during laminating or impregnating processes of a substrate, in particular a concrete substrate. In addition, in the case of this curing agent, the presence of highly undesirable free phenol *per se* (even above 10%) and the presence of free formaldehyde (below 1%) has been determined.

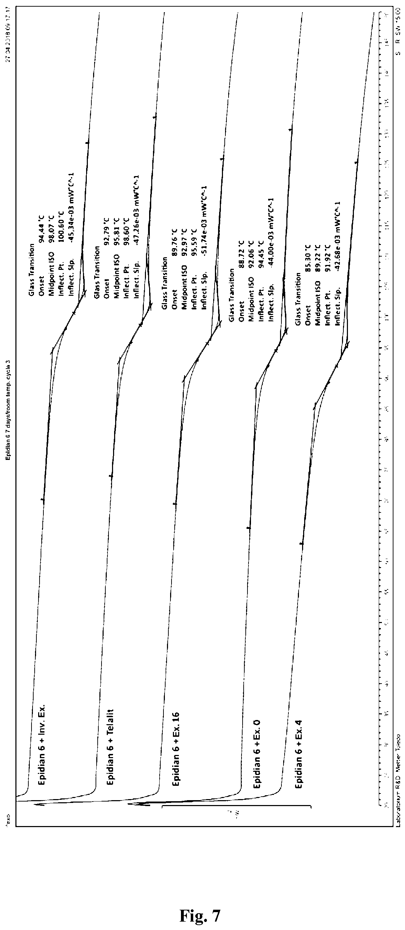

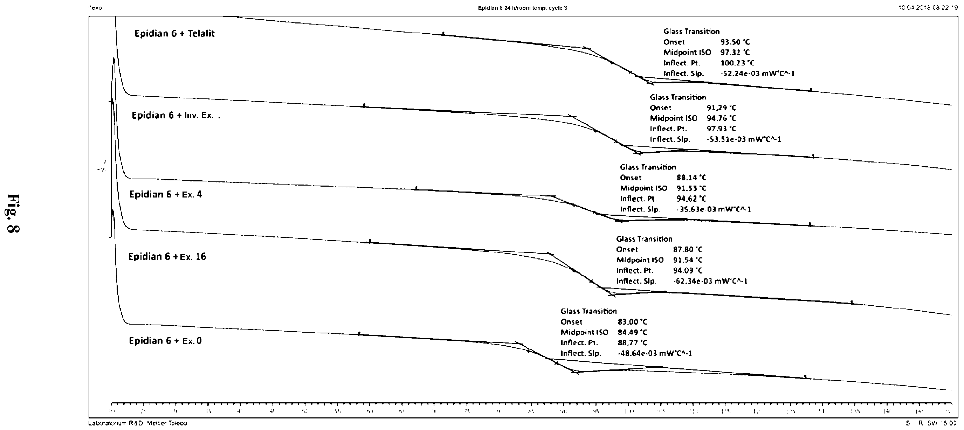

To measure the glass transition temperature, the composition ingredients indicated in Table 7 were thoroughly mixed. The curing was carried out at room temperature. After an adequate curing period (24 hours and after 7 days, respectively) samples of the cured compositions were collected. Before the glass transition temperature study was carried out, the samples of the cured compositions were powdered and weighed out into aluminium measuring pans. Then the pans were placed in the Mettler Toledo DSC 3 measuring apparatus and thermograms of heat capacity changes versus temperature were recorded by means of the differential scanning calorimetry, as shown in Fig. 7 and Fig. 8.

Table 7

| Parameters / Resin | Telalit 0846 | Samp. 0 | Samp. 4 | Samp. 16 | Inv. Samp. | TFF |
|---|---|---|---|---|---|---|
| | Epidian 6 + the curing agent | | | | | |
| Ratio resin : curing agent | 100:45 | 100:45 | 100:45 | 100:41 | 100:39 | 100 : 27 |
| Tg after 24 hours of curing [°C] | 100.23 | 88.77 | 94.62 | 94.09 | 97.93 | 117.76 |
| Tg after 7 days of curing [°C] | 98.6 | 94.45 | 91.92 | 95.59 | 100.6 | 116.75 |

As can be seen from Fig. 7 and Fig. 8 and from the results presented in Table 7, the glass transition temperature in the case of the epoxy-amine composition cured by means of the curing agent according to the present invention is the highest among all the curing agents comprising p-tertbutylphenol.

*Example 8 - Study of the influence of a stoichiometric ratio of the curing agent composition ingredients on the crystallization and surface properties*

Compositions of the curing agents according to the invention were prepared by the procedure as described in Example 1. Briefly, 4-tertbutylphenol was dissolved in 1,3-bis(aminomethyl)benzene (MXDA) in temperature 50-55°C, and after complete dissolution of phenol, the remaining raw substances were admixed to the mixture at the temperature not exceeding 50°C, at ratios listed in Table 8. The obtained mixtures were used in further studies without any additional modifications.

Table 8

| Sample No. / Ingredients | Inv. Samp. | Comp. Samp. 1 | Comp. Samp. 2 | Comp. Samp. 3 | Comp. Samp. 4 | Comp. Samp. 5 | Comp. Samp. 6 |
|---|---|---|---|---|---|---|---|
| 4-tertbutylphenol | 54 | 58,5 | 58 | 56 | 51 | 51 | 51 |
| MXDA | 36 | 36 | 36 | 36 | 36 | 34 | 32 |
| TMD | 5 | 5 | 5 | 5 | 5 | 5 | 5 |
| TEPA | 5 | 0.5 | 1 | 3 | 8 | 10 | 12 |
| Ratio resin/curing agent | 100 : 39 | 100 : 44 | 100 : 44 | 100 : 41 | 100 : 36 | 100 : 36 | 100 : 35 |

Subsequently the curing agent samples were tested in the real storage conditions to assess the crystallization degree of the curing agent during storage. In the course of the study the air temperature was unsettled and and ranged from +5 to -10°C as described previously in Example 1. All of the investigated compositions of the curing agent according to the invention did not undergo crystallization during storage at the temperatures above 0°C, whereas samples 3 to 6 did not undergo any crystallization also at the temperatures below 0°C. Thus the addition of tetraethylenepentamine (TEPA) to the base Sample 0 in the amount of 3 to 12% w/w does not restrict the applicability of the curing agent at low, negative temperatures, whereas by using lower amounts of tetraethylenepentamine, application of the curing agent is limited to storage temperature above 0°C.

Successively, samples of the curing agent according to the invention were mixed with the epoxy resin as described in Example 3 at the stoichiometric ratio indicated in Table 8. Next, thus obtained compositions of the curing agent with the epoxy resins were applied onto a concrete surface and tested as described above in Example 3.

This study has shown that the desired coating morphology, including in particular the gloss, is observed for the curing agent compositions with TEPA added in a wide range of ratios, between 1 and 10% by weight, preferably between 3 and 10% by weight. In this set of examples, the optimum properties were observed for the compositions having the curing agents with the TEPA content in the range from 3 to 8% by weight, and in particular 5% by weight.

*Conclusions*

As results from the above examples, the quaternary curing agent according to the invention comprising 4-tertbutylphenol, MXDA, TMD and TEPA is suitable for storage and use in conditions of the variable and lower temperature and high humidity, and coatings obtained by means of the composition according to the invention are characterized by the desired morphology.

The practical working examples discussed above were presented for illustrative purposes only and they are not aimed at restricting the scope of the invention as defined in the appended patent claims. Numerous modifications of the presently disclosed embodiments of the invention encompassed by the invention scope and covered by the appended claims will be apparent for a person skilled in the art.

**Claims**

1. An epoxy resin curing agent comprising polyamines and a compound of acidic character, **characterized in that** the curing agent comprises a mixture of a primary aliphatic diamine in the amount of 3 to 7%, a primary aliphatic-aromatic diamine in the amount of 34 to 38% and a compound of acidic character, which comprises at least one hydroxy group attached to at least one aromatic ring, in the amount of 49 to 59%, in combination with an aliphatic polyamine in the amount of 1 to 10% by weight, preferably in the amount of 3 to 10% by weight, more preferably from 3 to 8% by weight.

2. The curing agent of claim 1, **characterized in that** the primary aliphatic diamine is present in the amount of 5% by weight.

3. The curing agent of claim 1 or 2, **characterized in that** the primary aliphatic-aromatic diamine is present in the amount of 36% by weight.

4. The curing agent of any of claims 1 - 3, **characterized in that** the compound of acidic character is present in the amount of 52 to 56%, preferably in the amount of 54% by weight.

5. The curing agent of any of claims 1 - 4, **characterized in that** the aliphatic polyamine is present in the amount of 5% by weight.

6. The curing agent of any of claims 1 - 5, **characterized in that** the aliphatic diamine is an aliphatic diamine containing from 3 to 8 carbon atoms in the aliphatic chain, preferably 6 carbon atoms.

7. The curing agent of claim 6, **characterized in that** the aliphatic diamine is selected from a group consisting of 2,2,4-trimethyl-1,6-diaminohexane, 2,4,4-trimethyl-1,6-diaminohexane, and a combination thereof.

8. The curing agent of any of claims 1 - 7, **characterized in that** the aliphatic-aromatic diamine is 1,3-bis(aminomethyl)benzene.

9. The curing agent of any of claims 1 - 8, **characterized in that** the compound of acidic character containing at least one hydroxy group attached to at least one aromatic ring is butylphenol, preferably 4-tert-butylphenol.

10. The curing agent of any of claims 1 - 9, **characterized in that** the aliphatic polyamine is a pentamine, preferably tetraethylenepentamine.

11. The curing agent of any of claims 1 - 10, **characterized in that** it comprises a combination of: a) 2,2,4-trimethyl-1,6-diaminohexane or 2,4,4-trimethyl-1,6-diaminohexane or a mixture thereof in the amount of 5% by weight, b) 1,3-bis(aminomethyl)benzene in the amount of 36% by weight, c) 4-tert-butylphenol in the amount of 54% by weight and d) tetraethylenepentamine in the amount of 5% by weight.

12. A curing agent composition comprising the curing agent, as defined in any of claims 1 - 11, in combination with one or more additives selected from a group comprising fire retardant additives, diluents, fillers, rheology modifying additives, antifoaming agents, colorants, pigments, viscosity modifiers or impact resistance enhancers, fireproof additives, additives enhancing adhesion to fibrous materials and antioxidants.

13. An epoxy resin composition comprising at least one epoxy resin and the curing agent as defined in any of claims 1 - 11 or the curing agent composition as defined in claim 12.

14. The epoxy resin composition of claim 13, **characterized in that** the curing agent and the epoxy resin are present in the ratio within the range from 35:100 parts by weight to 45:100 parts by weight, preferably 36:100 to 41:100 parts by weight, most preferably in the ratio of 39:100.

15. Use of the curing agent as defined in any of claims 1 - 11, for curing of a composition comprising at least one epoxy resin.

16. The use of claim 15, **characterized in that** the curing is conducted at temperature in the range from +25 to -20°C, preferably from +20 to -15°C, and most preferably from + 5 to -10°C.

17. The use of claim 15 or 16, **characterized in that** the curing is carried out on a moist surface.


**Patentansprüche**

1. Ein Epoxidharz-Härtungsmittel, umfassend Polyamine und eine Verbindung mit saurem Charakter, **dadurch gekennzeichnet, dass** das Härtungsmittel eine Mischung aus einem primären aliphatischen Diamin in der Menge von 3 bis 7%, einem primären aliphatisch-aromatischen Diamin in der Menge von 34 bis 38% und einer Verbindung mit saurem Charakter umfasst, das mindestens eine Hydroxygruppe, die an mindestens einen aromatischen Ring gebunden ist, in einer Menge von 49 bis 59 % in Kombination mit einem aliphatischen Polyamin in einer Menge von 1 bis 10% pro Gewichtseinheit, vorzugsweise in einer Menge von 3 bis 10% pro Gewichtseinheit, besonders bevorzugt von 3 bis 8% pro Gewichtseinheit, umfasst.

2. Das Härtungsmittel nach Anspruch 1, **dadurch gekennzeichnet, dass** das primäre aliphatische Diamin in einer Menge von 5% pro Gewichtseinheit vorhanden ist.

3. Das Härtungsmittel nach Anspruch 1 oder 2, **dadurch gekennzeichnet, dass** das primäre aliphatisch-aromatische Diamin in einer Menge von 36% pro Gewichtseinheit vorhanden ist.

4. Das Härtungsmittel nach einem der Ansprüche 1 - 3, **dadurch gekennzeichnet, dass** die Verbindung mit saurem Charakter in einer Menge von 52 bis 56%, vorzugsweise in einer Menge von 54% pro Gewichtseinheit, vorhanden ist.

5. Das Härtungsmittel nach einem der Ansprüche 1 - 4, **dadurch gekennzeichnet, dass** das aliphatische Polyamin in einer Menge von 5% pro Gewichtseinheit vorhanden ist.

6. Das Härtungsmittel nach einem der Ansprüche 1 - 5, **dadurch gekennzeichnet, dass** das aliphatische Diamin ein aliphatisches Diamin ist, das 3 bis 8 Kohlenstoffatome in der aliphatischen Kette, vorzugsweise 6 Kohlenstoffatome, enthält.

7. Das Härtungsmittel nach Anspruch 6, **dadurch gekennzeichnet, dass** das aliphatische Diamin aus einer Gruppe ausgewählt ist, die aus 2,2,4-Trimethyl-1,6-diaminohexan, 2,4,4-Trimethyl-1,6-diaminohexan und einer Kombination davon besteht.

8. Das Härtungsmittel nach einem der Ansprüche 1 - 7, **dadurch gekennzeichnet, dass** das aliphatisch-aromatische Diamin I,3-Bis(aminomethyl)benzol ist.

9. Das Härtungsmittel nach einem der Ansprüche 1 - 8, **dadurch gekennzeichnet, dass** die Verbindung mit saurem Charakter, die mindestens eine an mindestens einen aromatischen Ring gebundene Hydroxygruppe enthält, Butylphenol, vorzugsweise 4-tert-Butylphenol, ist.

10. Das Härtungsmittel nach einem der Ansprüche 1 - 9, **dadurch gekennzeichnet, dass** das aliphatische Polyamin ein Pentamin, vorzugsweise Tetraethylenpentamin, ist.

11. Das Härtungsmittel nach einem der Ansprüche 1 -10, **dadurch gekennzeichnet, dass** es eine Kombination aus: a) 2,2,4-Trimethyl-1,6-diaminohexan oder 2,4,4-Trimethyl-1,6-diaminohexan oder einer Mischung davon in einer Menge von 5% pro Gewichtseinheit, b) 1,3-Bis(aminomethyl)benzol in einer Menge von 36% pro Gewichtseinheit, c) 4-tert-Butylphenol in einer Menge von 54% pro Gewichtseinheit und d) Tetraethylenpentamin in einer Menge von 5% pro Gewichtseinheit enthält.

12. Eine Härtungsmittelzusammensetzung, umfassend das Härtungsmittel, wie in einem der Ansprüche 1 - 11 definiert, in Kombination mit einem oder mehreren Additiven, ausgewählt aus einer Gruppe, umfassend feuerhemmende Additive, Verdünnungsmittel, Füllstoffe, Rheologie modifizierende Additive, Antischaummittel, Farbmittel, Pigmente, Viskositätsmodifikatoren oder Schlagfestigkeit verbessernde Zusätze, feuerfeste Additive, Additive, die die Haftung an Fasermaterialien verbessern, und Antioxidantien.

13. Eine Epoxidharzzusammensetzung, umfassend mindestens ein Epoxidharz und das Härtungsmittel nach einem der Ansprüche 1 - 11 oder die Härtungsmittelzusammensetzung nach Anspruch 12.

14. Die Epoxidharzzusammensetzung nach Anspruch 13, **dadurch gekennzeichnet, dass** das Härtungsmittel und das Epoxidharz in einem Verhältnis im Bereich von 35:100 Teilen pro Gewichtseinheit bis 45:100 Teilen pro Gewichtseinheit, vorzugsweise 36:100 bis 41:100 Teilen pro Gewichtseinheit, am bevorzugtesten im Verhältnis 39:100, vorhanden sind.

15. Verwendung des Härtungsmittels nach einem der Ansprüche 1 - 11 zur Härtung einer Zusammensetzung, die mindestens ein Epoxidharz enthält.

16. Verwendung nach Anspruch 15, **dadurch gekennzeichnet, dass** die Härtung bei einer Temperatur im Bereich von +25 bis -20°C, vorzugsweise von +20 bis -15°C und am bevorzugtesten von +5 bis -10°C, durchgeführt wird.

17. Die Verwendung von Anspruch 15 oder 16, **dadurch gekennzeichnet, dass** die Härtung auf einer feuchten Oberfläche durchgeführt wird.

**Revendications**

1. Agent de durcissement de résine époxy comprenant des polyamines et un composé de caractère acide, **caractérisé en ce que** l'agent de durcissement comprend un mélange d'une diamine aliphatique primaire en quantité de 3 à 7%, d'une diamine aliphatique-aromatique primaire en quantité de 34 à 38% et un composé de caractère acide, qui comprend au moins un groupe hydroxy attaché à au moins un cycle aromatique, en quantité de 49 à 59%, en combinaison avec une polyamine aliphatique en quantité de 1 à 10% en poids, de préférence en quantité de 3 à 10% en poids, plus préférablement de 3 à 8% en poids.

2. Agent de durcissement selon la revendication 1, **caractérisé en ce que** la diamine aliphatique primaire est présente en quantité de 5% en poids.

3. Agent de durcissement selon la revendication 1 ou 2, **caractérisé en ce que** la diamine aliphatique-aromatique primaire est présente en quantité de 36% en poids.

4. Agent de durcissement selon l'une quelconque des revendications 1 à 3, **caractérisé en ce que** le composé de caractère acide est présent en quantité de 52 à 56%, de préférence en quantité de 54% en poids.

5. Agent de durcissement selon l'une quelconque des revendications 1 à 4, **caractérisé en ce que** la polyamine aliphatique est présente en quantité de 5% en poids.

6. Agent de durcissement selon l'une quelconque des revendications 1 à 5, **caractérisé en ce que** la diamine aliphatique est une diamine aliphatique contenant de 3 à 8 atomes de carbone dans la chaîne aliphatique, de préférence 6 atomes de carbone.

7. Agent de durcissement selon la revendication 6, **caractérisé en ce que** la diamine aliphatique est choisie dans un groupe constitué par le 2,2,4-triméthyl-1,6-diaminohexane, le 2,4,4-triméthyl-1,6-diaminohexane et une combinaison de ceux-ci.

8. Agent de durcissement selon l'une quelconque des revendications 1 à 7, **caractérisé en ce que** la diamine aliphatique-aromatique est le 1,3-bis (aminométhyl) benzène.

9. Agent de durcissement selon l'une quelconque des revendications 1 à 8, **caractérisé en ce que** le composé de caractère acide contenant au moins un groupe hydroxy attaché à au moins un cycle aromatique est le butylphénol, de préférence le 4-tert-butylphénol.

10. Agent de durcissement selon l'une quelconque des revendications 1 à 9, **caractérisé en ce que** la polyamine aliphatique est une pentamine, de préférence la tétraéthylènepentamine.

11. Agent de durcissement selon l'une quelconque des revendications 1 à 10, **caractérisé en ce qu'**il comprend une combinaison de: a) 2,2,4-triméthyl-1,6-diaminohexane ou 2,4,4-triméthyl-1,6-diaminohexane ou un mélange de ceux-ci en quantité de 5% en poids, b) 1,3-bis (aminométhyl) benzène en quantité de 36% en poids, c) 4-tert-butylphénol en quantité de 54% en poids et d) tétraéthylènepentamine en quantité de 5% en poids.

12. Composition d'agent de durcissement comprenant l'agent de durcissement, tel que défini dans l'une quelconque des revendications 1 à 11, en combinaison avec un ou plusieurs additifs choisis dans un groupe comprenant des additifs ignifuges, des diluants, des charges, des additifs modifiant la rhéologie, des agents anti-mousse, des colorants, des pigments, des modificateurs de viscosité ou des agents améliorant la résistance aux chocs, des additifs anti-incendie, des additifs améliorant l'adhérence aux matériaux fibreux et des antioxydants.

13. Composition de résine époxy comprenant au moins une résine époxy et l'agent de durcissement tel que défini dans l'une quelconque des revendications 1 à 11 ou la composition d'agent de durcissement telle que définie dans la revendication 12.

14. Composition de résine époxy selon la revendication 13, **caractérisée en ce que** l'agent de durcissement et la résine époxy sont présents dans un rapport dans la plage de 35:100 parties en poids à 45:100 parties en poids, de préférence de 36:100 à 41:100 parties en poids, le plus préférablement dans un rapport de 39:100.

**15.** Utilisation de l'agent de durcissement tel que défini dans l'une quelconque des revendications 1 à 11, pour le durcissement d'une composition comprenant au moins une résine époxy.

**16.** Utilisation selon la revendication 15, **caractérisée en ce que** le durcissement est effectué à une température dans la plage de +25 à -20°C, de préférence de +20 à -15°C, et le plus préférablement de +5 à -10°C.

**17.** Utilisation selon la revendication 15 ou 16, **caractérisée en ce que** le durcissement est effectué sur une surface humide.

Fig. 1

Fig. 2

Fig. 3

Fig. 4

Fig. 5

Fig. 6

**Fig. 7**

Fig. 8

^exo

Epidian 6 24 h/room temp. cycle 3

10 04 2018 08 22 19

Epidian 6 + Telalit

**Glass Transition**
Onset 93.50 °C
Midpoint ISO 97.32 °C
Inflect. Pt. 100.23 °C
Inflect. Slp. -52.24e-03 mW°C^-1

Epidian 6 + Inv. Ex. .

**Glass Transition**
Onset 91.29 °C
Midpoint ISO 94.76 °C
Inflect. Pt. 97.93 °C
Inflect. Slp. -53.51e-03 mW°C^-1

Epidian 6 + Ex. 4

**Glass Transition**
Onset 88.14 °C
Midpoint ISO 91.53 °C
Inflect. Pt. 94.62 °C
Inflect. Slp. -35.63e-03 mW°C^-1

Epidian 6 + Ex. 16

**Glass Transition**
Onset 87.80 °C
Midpoint ISO 91.54 °C
Inflect. Pt. 94.09 °C
Inflect. Slp. -62.34e-03 mW°C^-1

Epidian 6 + Ex. 0

**Glass Transition**
Onset 83.00 °C
Midpoint ISO 84.49 °C
Inflect. Pt. 88.77 °C
Inflect. Slp. -48.64e-03 mW°C^-1

Laboratorium R&D Mettler Toledo

S - R SW 15.00

## REFERENCES CITED IN THE DESCRIPTION

**Patent documents cited in the description**

- GB 811905 A
- US 3294748 A
- US 3519582 A
- US 20090163676 A
- US 4129556 A

- DE 2612211
- DE 2025159
- DE 2823682
- US 6420496 B
- WO 2015117846 A1